# EUROPEAN PATENT APPLICATION

(11) **EP 2 703 743 A1**
(43) Date of publication of application: **05.03.2014**
(21) Application number: 13182613.3
(22) Date of filing: 02.09.2013
(51) Int. Cl.: F24F 11/00, F24F 13/10

(54) **Control device for an air duct**

(30) Priority: 04.09.2012 NL 2009413
(71) Applicant: Muco Technologies B.V., 1046 AG Amsterdam (NL)
(72) Inventor: Leipoldt, Peter, 1046 AG Amsterdam (NL)
(74) Representative: Plaggenborg, Menko Bernard

(57) **Abstract**

The invention relates to a control device for use in an air duct for blowing air into or removing air from a room. The control device comprises a fixing part with a valve seat that is positioned substantially fixedly with respect to the air duct and a valve that is moveable with respect to said valve seat, wherein said valve is suitable for being moved with respect to said valve seat between a mostly closed position and a mostly opened position. Said control device comprises a continuous passage for moving air through said control device and entering or leaving said room, said control device further comprising a sensor for measuring an air characteristic of said air carried through said passage. Preferably, the sensor is suitable for measuring the presence of at least one of CO₂ and humidity.

The control device further comprises a communication means for controlling a ventilator. This preferably is a wireless communication.

## Description

The present invention relates to a control device for an air duct in accordance with claim 1. The invention especially relates to such control device for connection to a construction element, for example an air duct, a ceiling or a wall. Such a control device is also identified as a valve or a rosette.

Hereafter, the term "closing device" will be used as well, referring to a control device, valve or rosette as mentioned above. The term "closing device", however, is not only limited to a device that is used for closing off an air duct. The device is mainly directed to controlling the passage of air through an air duct, and may amongst others be suitable for closing off said air duct. The control device is also suitable for controlling the passage of an air duct for guiding air into a room to be ventilated and an air duct for removing air from a room to be ventilated.

Such a control device is known in the art. For example, closing devices have been used since many years in buildings, like in houses and utility buildings. Such closing devices provide an entrance from a room to an air duct that is part of a building's ventilation system. The closing device is comprised of a fixed part that is connected to said construction element and a valve part that is movable with respect to said fixed part. Said valve part comprises a valve that may be moved between a relatively closed position and a relatively opened position. So as to obtain a suitable ventilation of all rooms comprising such closing device, each valve needs to be set to a standard position for yielding a proper ventilation at all times. As a matter of fact, an average situation should be taken as set point. When no persons are present in said room, a decreased rate of ventilation will be sufficient. On the other hand, when a larger number of people is present than was chosen as set point, ventilation will be insufficient. Furthermore, when a single valve is deviated from its original standard position, this results in an altered ventilation in every other room of said building, since the ventilator imposes a different pressure difference on the air ducts and on said other rooms.

From DE 198 52 821 a valve is known for use in an air conditioning system. At the side of the room to be ventilated a sensor is provided measuring a condition of the room's air. The valve can be placed in a closed position, in which the valve is closed completely, or a ventilating, opened position.

Furthermore, US 2011/0105012 describes a butterfly valve for use in an air duct. Said valve may be placed in an opened and a closed position. Only when the valve is in its opened position, the sensor may be used for measuring an air condition.

It is also known to increase the speed of a central ventilator that provides for suction from all rooms at once. However, this system has the disadvantage that ventilation is increased in all rooms, even if only a single room requires increased ventilation. This yields unnecessary energy loss of conditioned, for example heated or cooled, air.

As a consequence, such known closing device has the disadvantage that individual adjustments to changed circumstances are not possible.

The present invention now aims at providing an improved control device of the kind indicated in the preamble.

The invention especially aims at providing a control device of the kind indicated in the preamble that continuously measures the air quality of a room, based on which the rate of ventilation can be controlled.

The invention also relates to an improved control device allowing the ventilator to be controlled for varying the rate of ventilation.

So as to obtain at least one of the above mentioned goals, according to a first embodiment the present invention provides a control device comprising the characteristics of claim 1. This control device has the advantage that ventilation can be made dependent upon the actual need. There will be an air flow along the sensor at all times because of the continuous passage. Said continuous passage will remain opened, even when the valve has been closed completely. Said continuous passage may have a diameter of less than a millimetre to a few millimetres or even a centimetre or even more than a centimetre. Said diameter preferably is as small as possible, preferably such that an accurate measurement can be obtained. Such will provide for a continuous measurement of the air quality of the room to be ventilated without providing a substantial ventilation of said room. This provides a high energetic advantage. On the other hand, an accurate measurement is obtained due to the continuous throughput of fresh air from said room.

It has also shown that the invention can respond quicker to changing air quality than could be achieved with systems hitherto available. Furthermore, when using the control device according to the present invention. The ventilation is changed only then when it is strictly required. Energy loss is kept to a minimum, because conditioned (heated or cooled) air is not removed unintentionally from the room.

It has also shown that the control device is suitable for measuring characteristics of air that is brought into a room to be ventilated. When air that is introduced from the environment has a bad condition, it can be decided to close the valve and not introduce said air.

From practice, systems are known wherein air conditioning systems provide a measurement of the temperature of a room and decide to open or close a valve of a ventilation system. However, these systems do not provide a measurement of the air quality so as to decide whether or not to provide for ventilation of air from a room.

According to the present invention, it is especially preferred that said passage is provided inside said valve, said valve forming part of said control device. This enables to replace the valve part of a control device, for example one being part of a rosette of air valve, by a valve part of the present invention.

The invention further relates to a closing part wherein said sensor is suitable for measuring the presence of at least one of CO₂, humidity and hydrocarbons. It has shown that when a plurality of people is present in a room the concentration of these compounds increases. By providing a measurement based on the presence of these compounds, more in particular the concentration of these compounds in air that originates from the room, the valve may be brought into a relatively more opened position when the concentration increases. When the concentration decreases, the valve may be brought into a relatively more closed position.

The control and closing device according to the present invention further preferably comprises an actuator for moving said valve along at least part of the distance between the mostly opened and mostly closed position. An electronic control device may receive a signal from a sensor based on which the valve may be brought into a relatively more closed or opened position. The actuator preferably is an electromotor, for example a linear or stepper motor, that can easily be controlled and the position of which can be easily determined. Then, the valve position can be easily determined.

A further preferred embodiment is obtained when the closing device comprises a communication means that is connected to said control device or said actuator for communicating with a controller for a ventilator. When the sensor yields a signal that initiates a further opening of the valve so as to obtain an increased ventilation, a signal may be sent to the ventilator as well so as to increase the ventilator's rotational speed for increasing the air flow from the room. A combination of increased ventilator speed and a relatively further opened valve will provide for an increased room ventilation.

So as to be able to use the sensor and the control device and to control the actuator, all components being integrated in a compact unit, the control device according to the present invention preferably also comprises an electric power for feeding at least one of said sensor, said actuator, said control device and said communication means. For example, batteries may be provided, connected to the valve which yields a very compact unit.

Preferably, the closing device according to the present invention is built such that it comprises a fixing part to be connected to the air duct and a valve part that can be detachably connected to said fixing part, wherein said valve part and said valve that is movable with respect to said fixing part, as well as that it comprises the actuator and the electrical power. Such provides a closing part, the valve part of which can be detached easily, which is a great advantage when replacing the batteries or when cleaning the closing device.

A further simplified closing part is obtained when said valve part has a passage and wherein said sensor is positioned in communication with said passage. This provides the advantage that an existing rosette or the like, usually comprised of a fixing part to be connected to an air duct and a valve to be connected to said fixing part, can be adapted by simply replacing an existing valve by a valve part according to the present invention.

As a consequence, the present invention also relates to a valve part for use in a closing device according to any of the appending claims, comprising a valve part coupling part for cooperation with a coupling part of a fixing part that is to be connected to an air duct, wherein said valve part comprises a continuous passage for passing through air from a room to be ventilated and wherein a sensor is provided being in communication with said passage for measuring an air characteristic of said air passed through said passage.

Hereafter, the invention will be explained by means of a drawing. The drawing shows in:
Fig. 1 a perspective view of a closing device according to the present invention,
Fig. 2 an exploded view of a closing device according to the invention,
Fig. 3 a detailed view of a valve of a closing device according to the present invention,
Fig. 4 a detailed view of a valve part of a closing device according to the present invention,
Fig. 5 and 6 show a couple of circuit boards for use in a valve according to the present invention, and
Fig. 7 shows an example of a linear actuator for use in a valve according to the present invention.

In the figures, the same parts have been identified by the same reference numerals. However, not all parts that are required for a practical implementation of the invention have been shown, for ease of understanding of the drawing.

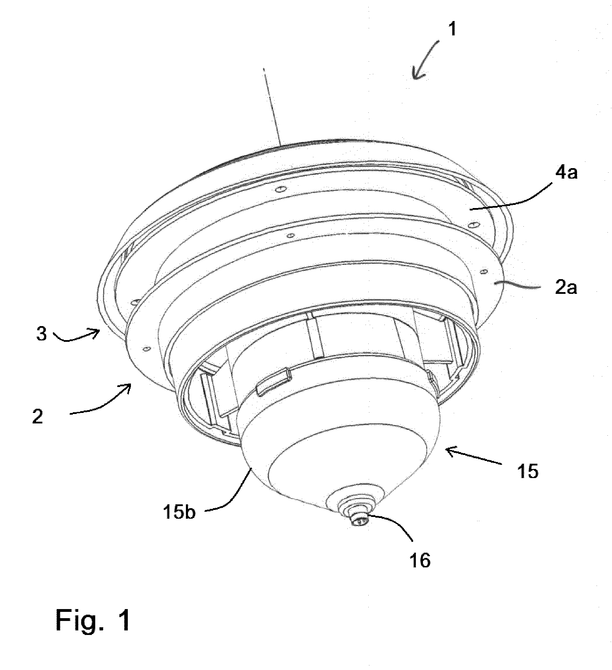

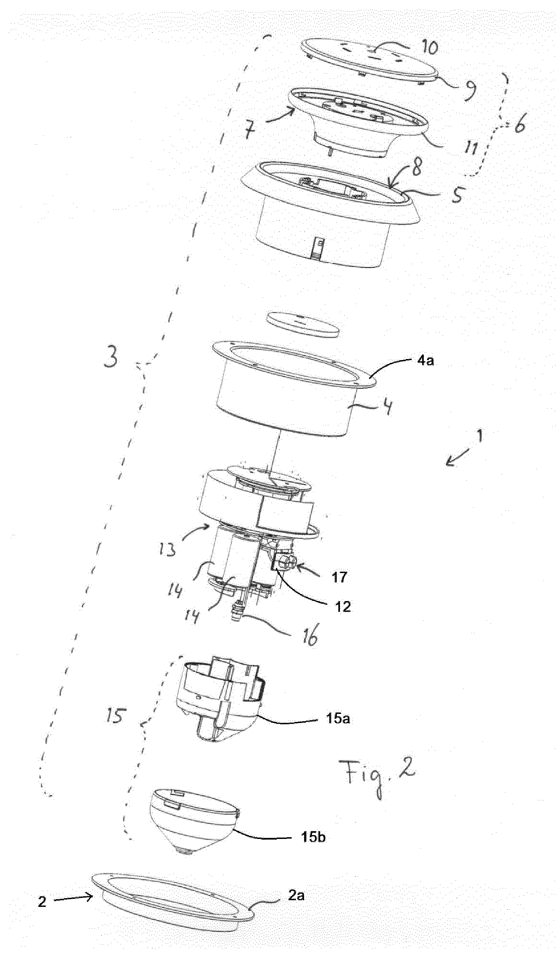

Fig. 1 shows a perspective view of a control device 1 according to the present invention. Such control device 1 is also identified as valve or rosette. The control device 1 as shown in the drawing is embodied for positioning in an air duct and is connected to said air duct. For removing air through said air duct from a room, a ventilator has been provided that provides for a continuous underpressure in said air duct between the ventilator and the room to be ventilated. The control or closing device 1 provides for removal of air from the room to be ventilated through said air duct. A valve device (not shown in Fig. 1) may be positioned against a valve seat of control device 1 for closing off control device 1 or may be moved away from said valve seat so as to open control device 1. Control device 1 comprises a fixing part that may be connected to an air duct (not shown). For example, a flange 2a of a connection ring 2 and a flange 4a of fitting box 4 (see Fig. 2) may be positioned and connected at both sides of a ceiling plate (not shown) or an air duct flange (not shown). Fitting box 4 may be connected to connection ring 2 by means of screws or the like.

Fig. 2 shows an exploded view of control device 1. Said complete control device 1 substantially comprises a fixing part, comprised of a connection ring 2, also called locking ring 2, and a fitting box 4, and valve part 3. Said fixing part, embodied as a ring 2 with flange 2a and fitting box 4 with flange 4a, is connected to an air duct (not shown). Ring 2 and fitting box 4 are mutually connected. This may for example be obtained through a close packing of fitting box 4 in ring 2 or by means of screws. Fitting box 4 may be connected releasably to ring 2 with the consequence that fitting box 4 may be taken away from ring 2. During normal usage, both parts will remain coupled to the air duct or to said ceiling plate. The remaining parts of valve part 3 are comprised within fitting box 4. As a consequence, complete valve part 3 may be taken out of fitting box 4.

In the embodiment shown in Fig. 1 all parts of valve part 3 have been incorporated within said valve seat 5 whereas valve seat 5 is positioned matching within fitting box 4.

Air that is passed through control device 1 because of ventilation of the room, will be passed between valve 6 and valve seat 5 when valve 6 has been opened at least partly. This way, dust and the like may deposit on said material parts. Cleaning is easily performed by taking away valve 6 from valve seat 5.

Valve seat 5 as shown in Fig. 2 can be taken away completely from fitting box 4. This way, cap 15b of housing 15 can be taken away, for example for changing batteries.

Valve part 3 comprises a valve seat 5 and a valve 6, between which a passage may be formed for ventilating air from a room. Valve 6 may be positioned closely to a rim 8 of said valve seat with circumferential edge 7 for closing off the passage between valve 6 and valve seat 5.

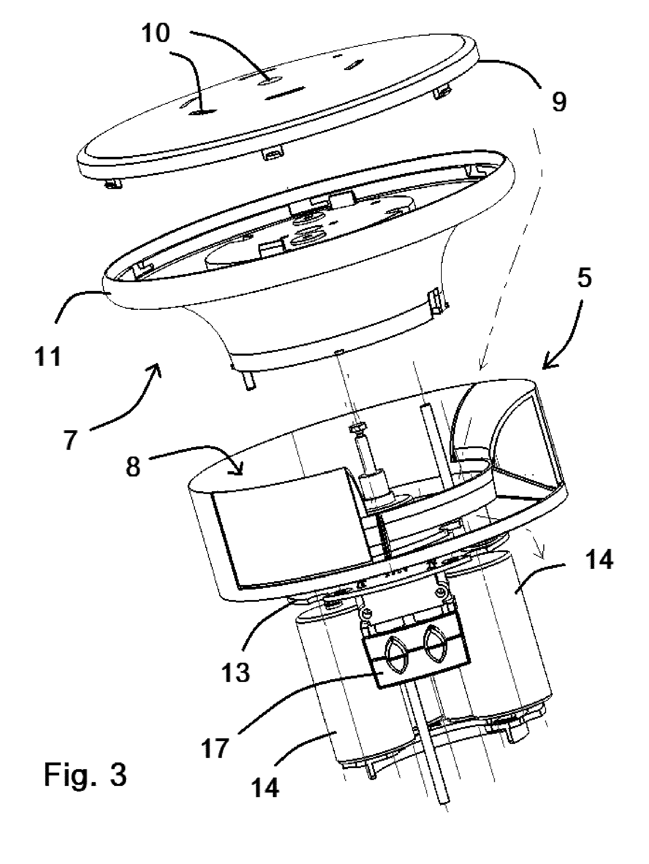

According to the invention a continuous passage is created in closing device 1 so as to continuously remove air from said room through said closing device. To that end, openings 10 have been provided in valve 6 that yields a continuous passage between the room to be ventilated and the air duct. In the embodiment shown, valve 6 has been provided with a valve body 11 and a valve cover 9. In the embodiment as shown in Fig. 2 and Fig. 3, openings 10 have been provided in valve cover 9.

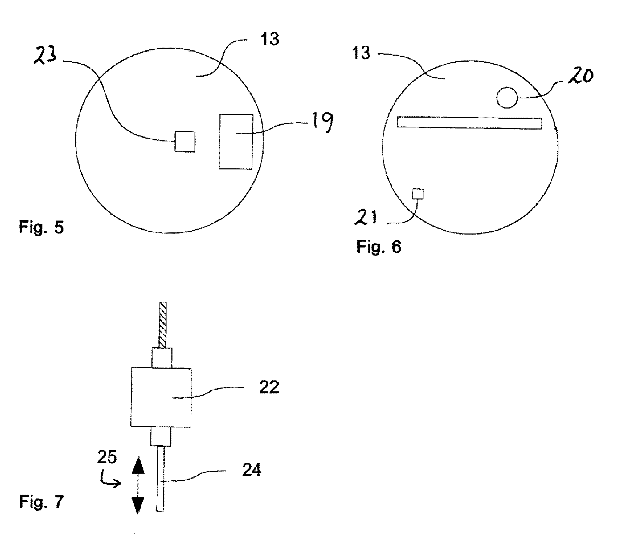

A sensor 19 provided on a circuit board 13 (see also Fig. 5) as well as an air scoop 17, as shown in Fig. 2 and Fig. 3, ensuring that part of the air passing through said passage is guided along sensor 19, are commonly positioned in sensor housing 12 in said passage, such that air that is passed through said passage is guided along sensor 19. Said sensor has been connected to control electronics that is provided on a circuit board 13 in valve part 3. Sensor 19 and said control electronics are powered by batteries 14. Said control electronics and other electronic components are placed inside housing part 15a of housing 15.

Optionally, an external power supply may be applied, connectable through a plug connector 16.

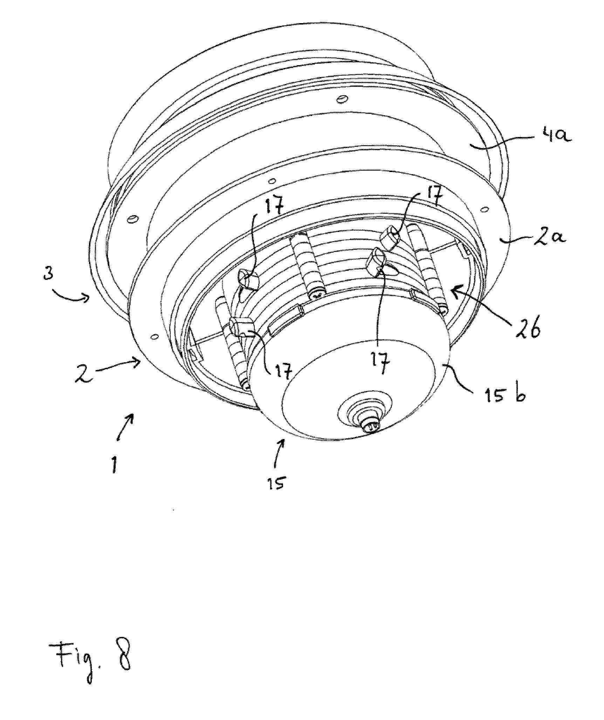

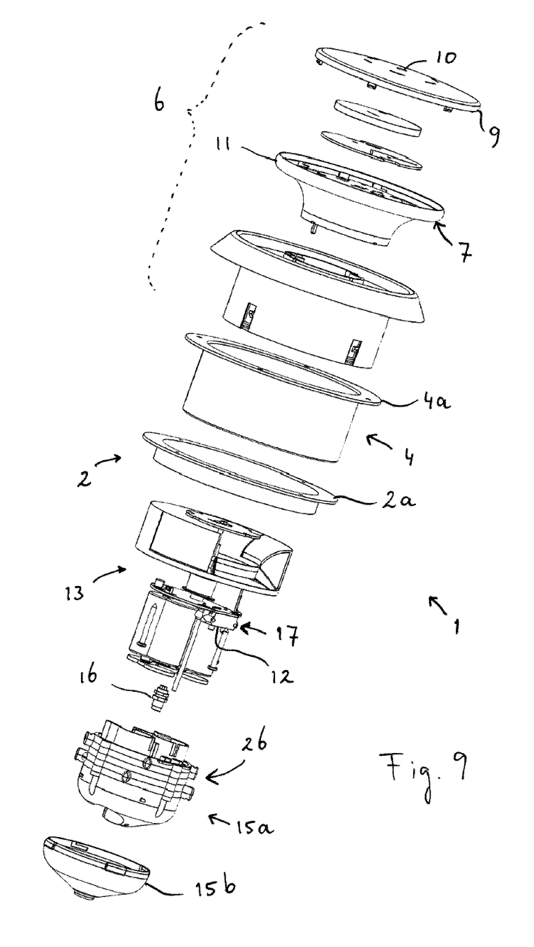

In Fig. 8, 9 and 10, an alternative embodiment of control device 1 has been shown, ensuring a proper guidance along sensor 19 of air from the room to be ventilated and that passed openings 10. In these figures, a flow stabilising ring 26 has been shown. This ring 26 provides for an accurate guidance of air along sensor 19 through air scoops 17. Fig. 9 shows an exploded view of control device 1, said flow stabilizing ring 26 being depicted in more detail. The larger number of air scoops 17, in relation to the embodiment as shown in Fig. 2, provides an increased air guidance along sensor 19, which yields a more accurate measurement.

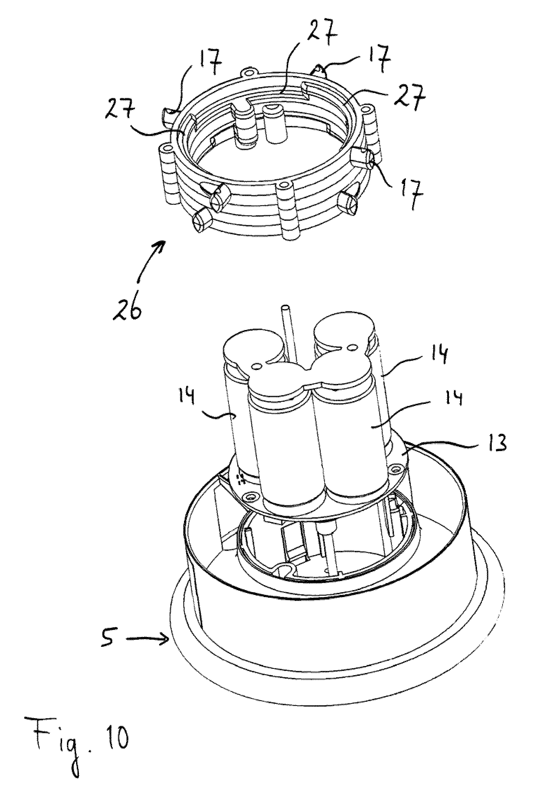

Fig. 10 more in particular shows that air flowing along the flow stabilizing ring's 26 outside is retained at the inside of said ring 26 through air scoops 17 and is forced into a circumferential or circular movement. This way, the sensor 19 will be arrived at anytime, even when a small amount of air is flowing through said openings 10 through said control device.

In fig. 3, a detailed view of valve part 3 has been shown. Air is received via the dotted line from the room to be ventilated into the air duct. The air is guided around valve 6 and through valve seat 5. Around batteries 14 and circuit board 13, a housing 15 has been provided (not shown in Fig. 3) shielding said components from dirt entrained with the air removed from said room.

As shown in Fig. 3, valve seat 5 is partially interrupted at its inner surface so as to be able to remove said air easily.

The continuous passage runs along openings 10 in valve cover 9 of valve 6 to sensors 20, 21. Also when valve 6 is positioned closely against valve seat 5, a stream of air will be removed from the room to be ventilated. This way, control of the air quality of the air in said room is guaranteed.

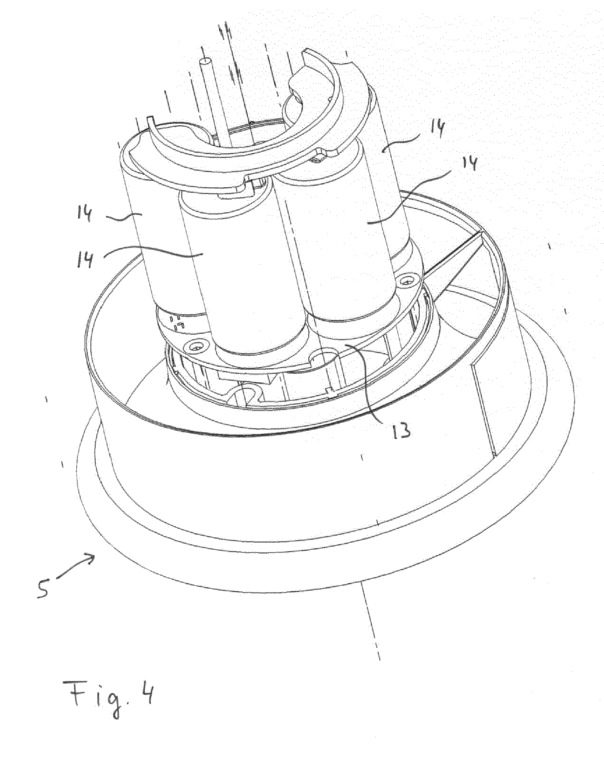

Fig. 4 finally shows a perspective detailed view of the bottom side of valve part 3, all batteries 14 and circuit board 13, as well as valve seat 5, being shown.

Said circuit board 13 comprises also a communication means that is coupled to said control electronics. Said communication means provides a connection between said control electronics of control device 1 and the ventilator and the sensors of the room to be ventilated; communication with an external control device and/or a building conditioning system is available, as well. Both a wired and a wireless communication is envisaged. A wireless communication is preferred due to ease of installation.

For example, the ventilator may be switched to an increased or decreased position when an increased or decreased, respectively, ventilation is required, for example when the sensor senses an increased CO₂ concentration of air humidity in the air ventilated from the room or a concentration that is below a threshold that was determined beforehand, respectively.

The control electronics on circuit board 13 may comprise communication modules, wherein different modules may provide for different kinds of communication protocols. A wireless communication module is preferred, wherein wireless communication is obtained in the range of between 400 and 2500 MHz. Examples of suitable wireless protocols are: Zigbee, IQRF, SimpleIT. These allow a wireless signal to be transmitted and received, for example from a ventilator's control electronics, switching the ventilator to an increased or decreased speed based on a measured air characteristic. When the ventilator is arranged to provide for ventilation of multiple rooms at once, wherein each room has its own air valve for controlling ventilation of said room, said control electronics may preferably be arranged to control said air valves independently and switch them to a relatively more opened or more closed position. This communication is preferably performed wirelessly via the protocols as mentioned above.

Fig. 5 and 6 show a view of a bottom side and a top side of a circuit board 13, respectively, whereas in Fig. 7 an example of a linear actuator 22 for switching valve 6 has been shown. Circuit board 13 comprises a CO₂ sensor 20, for measuring a CO₂ concentration in ait that is entrained through valve 6. Furthermore, a flow sensor 19 has been provided, measuring the flow of air through control device 1. A sensor 21 may be provided as well, for measuring the temperature and/or humidity of air that is entrained along said sensor. The air duct that has been provided near valve 6 has been arranged such that air that is removed from said room for ventilation needs, is at least partially guided along said sensor 19. The air in openings 10 in valve 6 is guided along sensors 20, 21.

Circuit board 13 further comprises a connector 23 for communication with a ventilation system of the building the room forms part of, or solely for the room to be ventilated. Optionally, Optionally, the connector may communicate with a home automation system for controlling said ventilator of the ventilation system. Such communication may be wired or wireless.

The linear actuator 22 may be controlled by electronics that has been provided on circuit board 13 or elsewhere. For example, valve 6 may be switched based on a measured CO₂ concentration, to a relatively further opened position with the consequence that room ventilation is increased which decreases the CO₂ concentration. Also, ventilation may be based on the temperature and/or humidity of the room to be ventilated.

For example, a driven shaft 24 may be connected to valve 6, ensuring that a movement of shaft 24 in the direction of arrow 25 yields a displacement of said valve with respect to valve seat 5, such that the opening between valve 6 and valve seat 5 is increased or decreased and ventilation is increased or decreased, respectively.

Electronics may be connected to a power source or to batteries; a combination thereof is envisaged as well.

The valve may form part of a building ventilation system wherein a plurality of rooms each is connected to a common central ventilator and the ventilator's setting is identical for all rooms en valves. In such case, the invention provides the possibility to vent each room in a dedicated fashion, since each valve is set on the basis of a measured air quality of said respective room. The ventilator may comprise control electronics detecting the position of each valve and increasing the ventilator's speed when a predetermined number of valves is set in a relatively opened position.

The control electronics of valves 6 may set said valve to a relatively further opened position when a measurement of an air characteristic, for example CO₂ concentration, humidity, temperature or the like is above a predetermined value. Based on the flow detected by said flow meter, for example measuring the flow through the regular ventilation opening, the valve's 6 position may be determined so as to keep said flow constant, for example when the ventilator is set to a higher speed whereas the measured air quality allows for a low degree of ventilation.

In a building, each room may be ventilated independently of the other rooms, when every valve is connected to a central control system, either wired 25 or wireless. Said control may be based on, for example, CO₂ a room's concentration, temperature, flow per valve, total ventilator flow, or valve setting.

Openings 10 may have diameter of for example from 1 mm to 10 mm. This ensures an adequate flow of air from the room that enables a measurement of the air composition without inducing a noticeable air flow in the room. The flow through openings 10, in case of a completely closed valve 6, may for example be from 0.1 to 10 litre per minute, but other flow values are applicable as well.

The invention is not limited to the embodiments as mentioned before and as shown in the drawing. The invention is limited by the appended claims only.

For example, the control device according to the present invention is applicable as device for controlling the passage of an air supply duct. Air that is obtained from elsewhere for supply in a room to be ventilated, can be verified by a single or a plurality of sensors provided in said control device. The control device may close the passage, when the air quality is insufficient and does not meet the quality standards.

The invention also relates to every combination of measures and actions that have been mentioned hereinbefore independently of one another.

## Claims

1. A control device for use in an air duct for blowing air into or removing air from a room, comprising a fixing part with a valve seat that is positioned substantially fixedly with respect to the air duct and a valve that is moveable with respect to said valve seat, wherein said valve is suitable for being moved with respect to said valve seat between a mostly closed position and a mostly opened position, **characterized in that** said control device comprises a continuous passage for moving air through said control device and entering or leaving said room, said control device further comprising a sensor for measuring an air characteristic of said air carried through said passage.

2. A control device according to claim 1, wherein said passage is provided inside said valve.

3. A control device according to claim 1 or 2, wherein said sensor is suitable for measuring the presence of at least one of CO₂, humidity and hydrocarbons.

4. A control device according to any of claims 1, 2 or 3, further comprising an actuator for moving said valve along at least part of the distance between the mostly opened and mostly closed position.

5. A control device according to claim 4, wherein said actuator comprises an electromotor, preferably a linear motor or stepper motor.

6. A control device according to any of the preceding claims, comprising a communication means that is connected to said actuator for communicating with a controller for a ventilator.

7. A control device according to any of the preceding claims, comprising an electric power for feeding at least one of said actuator and said communication means.

8. A control device according to any of the preceding claims, comprising a fixing part to be connected to said air duct and a valve part to be connected to said fixing part, wherein said valve part comprises the valve that is moveable with respect to said fixing part, as well as the actuator and the electrical power.

9. A control device according to claim 8, wherein said valve part comprises a passage and wherein said sensor is in communication with said passage.

10. A valve part for use in a control device according to any of the preceding claims, comprising a valve part coupling part for cooperation with a coupling part of a fixing part that is to be connected to an air duct, wherein said valve part comprises a continuous passage for passing through air from a room to be ventilated and wherein a sensor is provided being in communication with said passage for measuring an air characteristic of said air passed through said passage.
